# DEMANDE DE BREVET EUROPEEN

(11) **EP 3 623 647 A1**
(43) Date de publication de la demande: **18.03.2020**
(21) Numéro de dépôt: 19196343.8
(22) Date de dépôt: 10.09.2019
(51) Int. Cl.: F16B 5/02, B64C 1/26, F16B 19/02, F16B 43/02

(54) **DISPOSITIF DE LIAISON A DOUBLE CISAILLEMENT POURVU D'UN AXE EXCENTRIQUE ET DE MANCHONS EXCENTRIQUES, ENSEMBLE MÉCANIQUE COMPORTANT UN TEL DISPOSITIF ET PROCÉDÉ D'ASSEMBLAGE**

(30) Priorité: 13.09.2018 FR 1858211
(71) Demandeur: AIRBUS (SAS), 31707 Blagnac (FR)
(72) Inventeur: BRINDEAU, Jean-Mickael, 31700 Blagnac (FR); AQUILA, André, 31700 Cornebarrieu (FR); RUSCASSIE, Benoit, 31700 Blagnac (FR)
(74) Mandataire: Gevers & Orès

(57) **Abrégé**

- Dispositif de liaison à double cisaillement pourvu d'un axe excentrique et de manchons excentriques, ensemble mécanique comportant un tel dispositif et procédé d'assemblage.
- Le dispositif de liaison (1) comporte un axe excentrique (2) ainsi que deux manchons excentriques (10A, 10B) destinés à être montés sur l'axe excentrique (2) de manière à permettre, par un positionnement adéquat en rotation des manchons excentriques sur l'axe excentrique (2), la compensation d'éventuels jeux entre des trous circulaires (T1, T2, T3) superposés des pièces mécaniques (P1, P2) devant être liés ensemble au moyen dudit dispositif de liaison (1), le dispositif de liaison (1) comprenant également des éléments de blocage (16, 27) aptes à bloquer en rotation les manchons excentriques (10A, 10B), ledit dispositif de liaison (1) permettant ainsi de générer une liaison rapide, propre et apte à compenser localement des jeux.

## Description

### DOMAINE TECHNIQUE

La présente invention concerne un dispositif de liaison destiné à lier ensemble deux pièces mécaniques distinctes.

Dans le cadre de la présente invention, une première desdites pièces mécaniques est munie d'une fourche à deux branches, chacune desdites branche étant pourvue d'au moins un trou circulaire, et la seconde desdites pièces mécaniques comprend une extrémité pourvue d'au moins un trou circulaire, qui est destinée à être insérée dans ladite fourche.

### ÉTAT DE LA TECHNIQUE

Un tel dispositif de liaison peut être utilisé dans tout domaine, notamment aéronautique mais non exclusivement, nécessitant une opération d'assemblage structural entre deux pièces (ou structures) mécaniques de ce type qui présentent un certain jeu.

Bien que non exclusivement, la présente invention peut s'appliquer plus particulièrement à la fixation de pièces mécaniques sur un aéronef en particulier sur un avion de transport, et en particulier à la fixation d'un module de plancher dans le fuselage d'un aéronef.

Pour réduire le temps de fabrication d'un aéronef, il est envisagé de réaliser des opérations parallèlement, notamment en développant des modularités. Pour ce faire, des modules sont préfabriqués et préassemblés, avant d'être intégrés dans la structure du fuselage de l'aéronef, tardivement dans le processus de fabrication. Ce mode d'assemblage peut, notamment, concerner un ou plusieurs modules de plancher. A cet effet, chaque module de plancher peut être équipé de conduites d'eau, de câblages électriques, de gaines d'aération, de panneaux de sol,....

Pour intégrer efficacement un tel module de plancher complètement équipé dans le fuselage, les interfaces (ou points de liaison) entre le module et le fuselage doivent être connectés le plus rapidement possible, à l'aide de dispositifs de liaison. La fixation doit également être propre et être apte à compenser d'éventuels jeux. En effet, il apparaît généralement des jeux aux différents points de liaison, dus à des géométries imparfaites et/ou à des défauts d'alignement de pièces ou de trous.

Il est intéressant de pouvoir disposer d'un dispositif de liaison apte à réaliser un assemblage permettant de compenser des jeux, généralement de quelques millimètres, et cela sans avoir à réaliser d'opérations d'ajustement ou des perçages pour disposer d'un assemblage propre dans la phase d'assemblage finale, qui peut être réalisé rapidement.

### EXPOSÉ DE L'INVENTION

La présente invention propose un dispositif de liaison permettant de réaliser une liaison rapide, propre et apte à compenser efficacement des jeux. Pour ce faire, elle concerne un dispositif de liaison destiné à lier ensemble deux pièces mécaniques, une première desdites pièces mécaniques étant munie d'une fourche à deux branches, chacune desdites branche étant pourvue d'un trou circulaire, et la seconde desdites pièces mécaniques étant pourvue d'un trou circulaire.

Selon l'invention, ledit dispositif de liaison comporte au moins :
- un axe excentrique comprenant au moins des premier et deuxième tronçons cylindriques coaxiaux présentant un premier axe de révolution et, entre ces premier et deuxième tronçons cylindriques, un troisième tronçon cylindrique présentant un second axe de révolution, lesdits premier et second axes de révolution étant différents, ledit troisième tronçon cylindrique étant destiné à traverser le trou circulaire de ladite seconde pièce mécanique ;
- un premier manchon excentrique comprenant au moins un cylindre creux pourvu d'une surface cylindrique externe et d'une surface cylindrique interne, la surface cylindrique externe étant destinée à être insérée dans le trou circulaire d'une première desdites branches de la fourche et la surface cylindrique interne étant destinée à recevoir le premier tronçon cylindrique de l'axe excentrique, lesdites surfaces cylindriques interne et externe du premier manchon excentrique présentant des axes de révolution différents ; et
- un second manchon excentrique comprenant au moins un cylindre creux pourvu d'une surface cylindrique externe et d'une surface cylindrique interne, la surface cylindrique externe étant destinée à être insérée dans le trou circulaire de la seconde desdites branches de la fourche et la surface cylindrique interne étant destinée à recevoir le deuxième tronçon cylindrique de l'axe excentrique, lesdites surfaces cylindriques interne et externe du second manchon excentrique présentant des axes de révolution différents.

De préférence, bien que non exclusivement, ledit dispositif de liaison comporte de plus :
- un premier élément de blocage apte à bloquer en rotation le premier manchon excentrique ; et
- un second élément de blocage apte à bloquer en rotation le second manchon excentrique.

Ainsi, grâce aux caractéristiques de triple excentricité due à l'axe excentrique et aux manchons excentriques (destinés à être montés sur l'axe excentrique) qui coopèrent, on dispose d'une tolérance réglable entre le troisième tronçon de l'axe excentrique (destiné à être inséré dans le trou circulaire de la seconde pièce mécanique) et les tronçons cylindriques comprenant la surface cylindrique externe des manchons excentriques (destinés à être insérés dans les trous circulaires de la première pièce mécanique). Cette tolérance est réglable par la rotation des manchons excentriques sur l'axe excentrique. Ainsi, par un positionnement adéquat en rotation des manchons excentriques sur l'axe excentrique, on est en mesure de compenser d'éventuels jeux entre les trous circulaires (superposés) des pièces mécaniques à lier ensemble. Ce positionnement en rotation, une fois réglé, est fixé par les premier et second éléments de blocage.

Le dispositif de liaison permet ainsi de réaliser une liaison (ou assemblage) qui est en mesure de compenser d'éventuels jeux et ceci sans avoir à réaliser d'opérations d'ajustement ou de perçages, ce qui permet d'obtenir une liaison propre et de réaliser l'assemblage rapidement.

Avantageusement, le dispositif de liaison comporte un joint à rotule destiné à être disposé entre ledit troisième tronçon cylindrique et ledit trou circulaire de la seconde pièce mécanique.

Dans un mode de réalisation préféré, le premier élément de blocage comprend une première plaquette pourvue d'une ouverture circulaire à bord interne cranté, destinée à enserrer un bord périphérique cranté de forme complémentaire dudit premier manchon excentrique, ladite première plaquette étant apte à être fixée.

De plus, dans un mode de réalisation préféré, le second élément de blocage comprend une seconde plaquette pourvue d'une ouverture circulaire à bord interne cranté, destinée à enserrer un bord périphérique cranté de forme complémentaire dudit second manchon excentrique, ladite seconde plaquette étant apte à être fixée.

Avantageusement, les premier, deuxième et troisième tronçons cylindriques de l'axe excentrique sont raccordés directement l'un à l'autre longitudinalement.

En outre, de façon avantageuse, ledit axe excentrique est pourvu, à chacune de ses extrémités, d'un tronçon fileté destiné à recevoir un écrou.

La présente invention concerne également un ensemble mécanique (ou assemblage mécanique) qui comporte une première pièce mécanique, une seconde pièce mécanique et un dispositif de liaison tel que celui décrit ci-dessus, qui lie ensemble lesdites première et seconde pièces mécaniques.

Avantageusement, le premier élément de blocage et le second élément de blocage sont fixés sur la première pièce mécanique.

La présente invention concerne, en outre, un procédé d'assemblage de deux pièces mécaniques, à l'aide d'un dispositif de liaison tel que celui décrit ci-dessus, une première desdites pièces mécaniques étant munie d'une fourche à deux branches, chacune desdites branches étant pourvue d'un trou circulaire, et la seconde desdites pièces mécaniques étant pourvue d'un trou circulaire.

Selon l'invention, ledit procédé d'assemblage comprend des étapes consistant, successivement, au moins :
- à amener la seconde pièce mécanique de sorte qu'une extrémité de cette dernière, pourvue du trou circulaire, soit introduite entre les branches de la fourche de la première pièce mécanique (pourvu de deux trous circulaires) de manière à superposer les trois trous circulaires ;
- à insérer l'axe excentrique et les manchons excentriques dans ces trous circulaires superposés et les amener dans des positions relatives en rotation permettant de compenser le cas échéant des jeux ; et
- à bloquer en rotation les manchons excentriques et l'axe excentrique, à l'aide des éléments de blocage.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est une vue schématique, en coupe et légèrement en perspective, d'un mode de réalisation particulier d'un dispositif de liaison liant ensemble deux pièces mécaniques ;
- la figure 2 est une vue éclatée, en perspective, de deux pièces mécaniques et des différents éléments d'un dispositif de liaison destiné à lier ensemble ces deux pièces mécaniques ;
- la figure 3 est une vue en perspective d'un axe excentrique ;
- la figure 4 est une vue en perspective d'un manchon excentrique ;
- les figures 5 et 6 sont des vues, en perspective, d'un ensemble mécanique comprenant deux pièces mécaniques partiellement superposées et un dispositif de liaison qui les lie ensemble, en regardant respectivement d'un côté et de l'autre du dispositif de liaison ; et
- la figure 7 illustre schématiquement les étapes principales d'un procédé d'assemblage d'un tel ensemble mécanique.

### DESCRIPTION DÉTAILLÉE

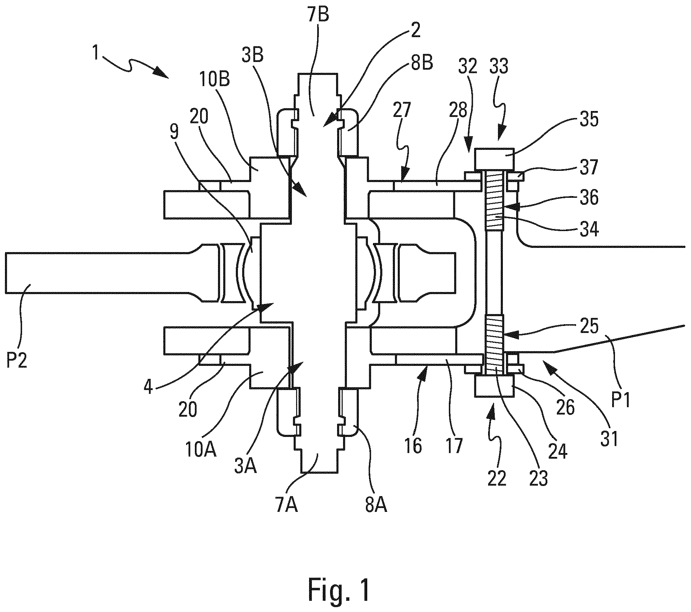

Le dispositif de liaison 1, représenté schématiquement dans un mode de réalisation particulier sur la figure 1, est destiné à réaliser une liaison entre deux pièces mécaniques P1 et P2 distinctes.

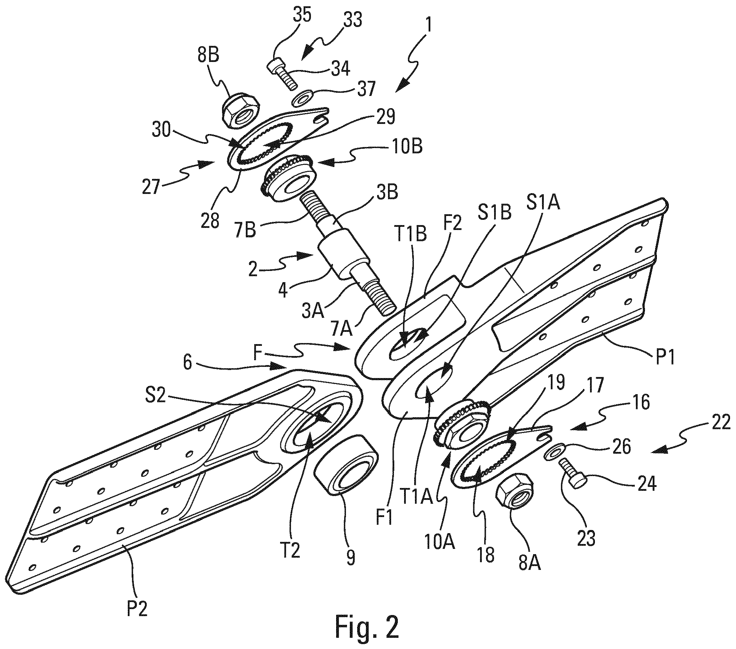

La pièce mécanique P1 est munie d'une fourche F à deux branches F1 et F2, comme représenté sur la figure 2. Chacune desdites branches F1 et F2 est pourvue d'un trou circulaire T1A, T1B, les deux trous circulaires T1A, T1B se faisant face. La pièce mécanique P2 est pourvue d'un trou circulaire T2. Pour l'assemblage, la pièce mécanique P2 est agencée de sorte qu'une extrémité (ou partie) 6 de cette dernière, pourvue du trou circulaire T2, est introduite entre les branches F1 et F2 de la fourche F de la pièce mécanique P1 de manière à superposer les trois trous circulaires T1A, T1B et T2 de préférence de même diamètre, par l'intermédiaire desquels le dispositif de liaison 1 lie ensemble lesdites pièces mécaniques P1 et P2.

Pour ce faire, le dispositif de liaison 1 comporte, comme représenté sur les figures 1 et 2, un axe excentrique 2 plein.

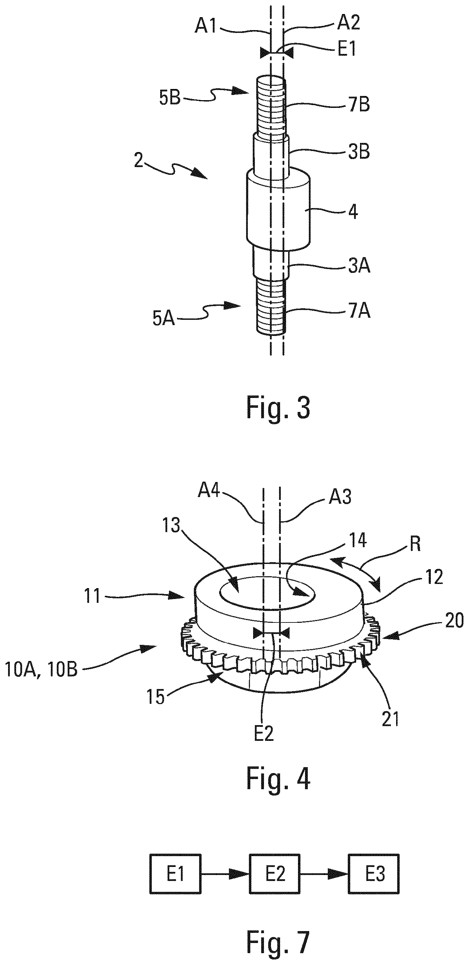

L'axe excentrique 2 comprend notamment, comme montré sur la figure 3 :
- des tronçons cylindriques 3A et 3B qui sont réalisés, chacun, sous forme d'un cylindre droit et circulaire et qui présentent un même axe (central) de révolution A1 ; et
- entre ces tronçons cylindriques 3A et 3B, un tronçon cylindrique 4 réalisé sous forme d'un cylindre droit et circulaire qui présente un axe (central) de révolution A2.

Les tronçons cylindriques 3A, 4 et 3B sont raccordés directement les uns aux autres longitudinalement (à savoir dans la direction desdits axes de révolution A1 et A2). Les tronçons cylindriques 3A et 3B présentent des longueurs le long de l'axe de révolution A1 sensiblement identiques. Les tronçons cylindriques 3A et 3B présentent également des diamètres par rapport à l'axe de révolution A1 sensiblement identiques. Les tronçons cylindriques 3A, 4 et 3B forment l'axe excentrique 2 qui est symétrique par rapport à un plan de symétrie de la pièce mécanique P1.

L'axe 2 est dit excentrique, car les deux axes de révolution A1 et A2 sont différents, c'est-à-dire non coaxiaux, tout en étant parallèles l'un à l'autre. En d'autres termes, les centres des sections transversales circulaires, d'une part des tronçons cylindriques 3A et 3B, et d'autre part du tronçon cylindrique 4, sont différents, c'est-à-dire décalés l'un par rapport à l'autre, comme illustré sur la figure 3 par un écartement (ou décalage) E1 (dans un plan orthogonal auxdits axes de révolution A1 et A2 parallèles). Il existe donc, sur l'axe excentrique 2, un premier décalage entre les tronçons cylindriques 3A et 4 et un second décalage entre les tronçons cylindriques 3B et 4.

Le tronçon cylindrique 4 de l'axe excentrique 2 est destiné à être inséré dans un trou circulaire d'une desdites pièces mécaniques P1 et P2 à lier ensemble, à savoir dans le trou circulaire T2 de la pièce mécanique P2 dans l'exemple des figures 1 et 2, en étant en contact de la surface interne S2 du trou circulaire T2 par l'intermédiaire d'un joint à rotule 9.

Ce joint à rotule 9 est destiné à être disposé entre ledit tronçon cylindrique 4 de l'axe excentrique 2 et ledit trou circulaire T2 de la pièce mécanique P2. Le joint à rotule 9 permet de compenser d'éventuels jeux entre la pièce mécanique P2 et le tronçon cylindrique 4.

Comme représenté sur la figure 3, l'axe excentrique 2 est pourvu, à chacune de ses deux extrémités longitudinales 5A et 5B, d'un tronçon fileté 7A, 7B destiné à recevoir un écrou 8A, 8B (figure 2).

Le dispositif de liaison 1 comporte, de plus, deux manchons excentriques 10A et 10B. Comme représenté sur la figure 4, chaque manchon excentrique 10A, 10B est un cylindre creux. Chaque manchon excentrique 10A, 10B comprend un tronçon cylindrique 11 pourvu d'une surface cylindrique externe (ou périphérique) 12 et d'une ouverture interne cylindrique 13. L'ouverture interne cylindrique 13 délimite une surface cylindrique interne 14. Dans le cadre de la présente invention, les adjectifs « interne » et « externe » sont définis, pour un tronçon cylindrique ou un cylindre, radialement par rapport à l'axe (central) de révolution de ce tronçon cylindrique ou de ce cylindre, respectivement vers cet axe de révolution (pour « interne ») et en s'écartant de cet axe de révolution (« pour externe »).

Chaque manchon 10A, 10B est dit excentrique, car la surface cylindrique externe 12 et la surface cylindrique interne 14 présentent des axes de révolution A3 et A4 qui sont également différents, c'est-à-dire non coaxiaux, tout en étant parallèles l'un à l'autre. En d'autres termes, les centres des sections transversales circulaires des surfaces cylindriques externe et interne 12 et 14 sont différents, c'est-à-dire décalés l'un par rapport à l'autre, comme illustré sur la figure 4 par un écartement (ou décalage) E2 (dans un plan orthogonal auxdits axes de révolution A3 et A4 parallèles).

Le tronçon cylindrique 11 du manchon excentrique 10A est destiné à être inséré dans un trou circulaire de la pièce mécanique P1, à savoir dans le trou circulaire T1A de la pièce mécanique P1 dans l'exemple des figures 1 et 2, avec la surface cylindrique externe 12 en contact de la surface interne S1A du trou circulaire T1A.

De même, le tronçon cylindrique 11 du manchon excentrique 10B est destiné à être inséré dans un trou circulaire de la pièce mécanique P1, à savoir dans le trou circulaire T1B de la pièce mécanique P1 dans l'exemple des figures 1 et 2, avec la surface cylindrique externe 12 en contact de la surface interne S1B du trou circulaire T1B.

En outre, les ouvertures cylindriques internes 13 des manchons excentriques 10A et 10B sont destinées à recevoir, respectivement, les tronçons cylindriques 3A et 3B de l'axe excentrique 2. Les manchons excentriques 10A et 10B présentent des longueurs sensiblement identiques. Les manchons excentriques 10A et 10B présentent également des diamètres sensiblement identiques.

Ainsi, grâce à cet axe excentrique 2 et à ces manchons excentriques 10A et 10B (qui sont destinés à être montés sur l'axe excentrique 2), on dispose sur le dispositif de liaison 1 d'une triple excentricité, avec un écartement E1 et deux écartements E2. On dispose, ainsi, d'une tolérance réglable entre le tronçon 4 de l'axe excentrique 2 (destiné à être inséré dans le trou circulaire T2 de la pièce mécanique P2) et les tronçons cylindriques 11 (de surface cylindrique externe 12) des manchons excentriques 10A et 10B (qui sont destinés à être insérés, respectivement, dans les trous circulaires T1A et T1B de la pièce mécanique P1). Cette tolérance est réglable par la rotation des manchons excentriques 10A et 10B, dans l'un ou l'autre sens (comme illustré par une double flèche R sur la figure 4), sur l'axe excentrique 2. Ainsi, par un positionnement relatif adéquat en rotation entre les manchons excentriques 10A et 10B et l'axe excentrique 2, on est en mesure de compenser un éventuel jeu entre les trois trous circulaires T1A, T1B et T2 (superposés) des pièces mécaniques P1 et P2 à lier ensemble, et ainsi à bloquer les pièces mécaniques P1 et P2 l'une par rapport à l'autre, en cisaillement.

Le dispositif de liaison 1 permet, par conséquent, de réaliser une liaison (ou un assemblage) qui est en mesure de compenser d'éventuels jeux (jusqu'à quelques millimètres) dus, notamment, à une géométrie imparfaite des trous circulaires T1A, T1B et T2 et/ou à un désalignement de ces trous circulaires T1A, T1B et T2 quand ils sont superposés, et ceci sans avoir à réaliser d'opérations d'ajustement ou de perçages, ce qui permet d'obtenir une liaison propre et de réaliser l'assemblage rapidement.

Lorsque le positionnement approprié en rotation (entre les manchons excentriques 10A et 10B et l'axe excentrique 2) est obtenu, l'ensemble est bloqué en rotation.

Pour ce faire, le dispositif de liaison 1 comporte un élément de blocage 16 destiné à bloquer en rotation le manchon excentrique 10A.

Dans un mode de réalisation préféré, l'élément de blocage 16 comprend, comme représenté sur la figure 2, une plaquette 17. Cette plaquette 17 est pourvue d'une ouverture circulaire 18 présentant un bord interne 19 cranté. De plus, le manchon excentrique 10A comprend une couronne périphérique 20 agencée entre le tronçon cylindrique 11 et un tronçon 15 d'extrémité, comme représenté sur la figure 4. Cette couronne périphérique 20 comprend un bord périphérique (ou externe) 21 cranté de forme complémentaire au bord interne 19 cranté de l'ouverture circulaire 18.

Pour réaliser le blocage, la plaquette 17 est positionnée de sorte que le bord interne 19 cranté de l'ouverture circulaire 18 enserre le bord périphérique 21 cranté de forme complémentaire de la couronne périphérique 20 du manchon excentrique 10A. Puis, la plaquette 17 est fixée sur la pièce mécanique P1, à l'aide de moyens de fixation usuels. Dans l'exemple des figures 1 et 2, la plaquette 17 est fixée à l'aide d'une vis 22 comportant une tige filetée 23 et une tête 24, qui est vissée dans un perçage fileté 25 coopérant de la pièce mécanique P1. De plus, une rondelle 26 est agencée entre la tête 24 et la plaquette 17.

Pour réaliser le blocage en rotation entre les manchons excentriques 10A et 10B et l'axe excentrique 2, le dispositif de liaison 1 comporte également un élément de blocage 27 destiné à bloquer en rotation le manchon excentrique 10B. La forme de l'élément de blocage 27 est sensiblement identique à la forme de l'élément de blocage 16.

Dans un mode de réalisation préféré, l'élément de blocage 27 comprend, comme représenté sur la figure 2, une plaquette 28. Cette plaquette 28 est pourvue d'une ouverture circulaire 29 présentant un bord interne 30 cranté. De plus, comme le manchon excentrique 10A, le manchon excentrique 10B comprend la couronne périphérique 20 agencée entre les tronçons 11 et 15, comme représenté sur la figure 4. Cette couronne périphérique 20 est pourvu du bord périphérique (ou externe) 21 cranté qui est conçu pour être de forme complémentaire au bord interne 30 cranté de ladite ouverture circulaire 29.

Pour réaliser le blocage, la plaquette 28 est positionnée de sorte que le bord interne 30 cranté de l'ouverture circulaire 29 enserre le bord périphérique 21 cranté de forme complémentaire de la couronne périphérique 20 du manchon excentrique 10B. Puis, la plaquette 28 est fixée sur la pièce mécanique P2, à l'aide de moyens de fixation usuels. Dans l'exemple des figures 1 et 2, la plaquette 28 est fixée à l'aide d'une vis 33 comportant une tige filetée 34 et une tête 35, qui est vissée dans un perçage fileté 36 coopérant de la pièce mécanique P1. De plus, une rondelle 37 est agencée entre la tête 35 et la plaquette 28.

La plaquette 17 est vissée sur une face 31 (figure 1) de la pièce mécanique P1 et la plaquette 28 est visée sur une face 32 opposée à la face 31.

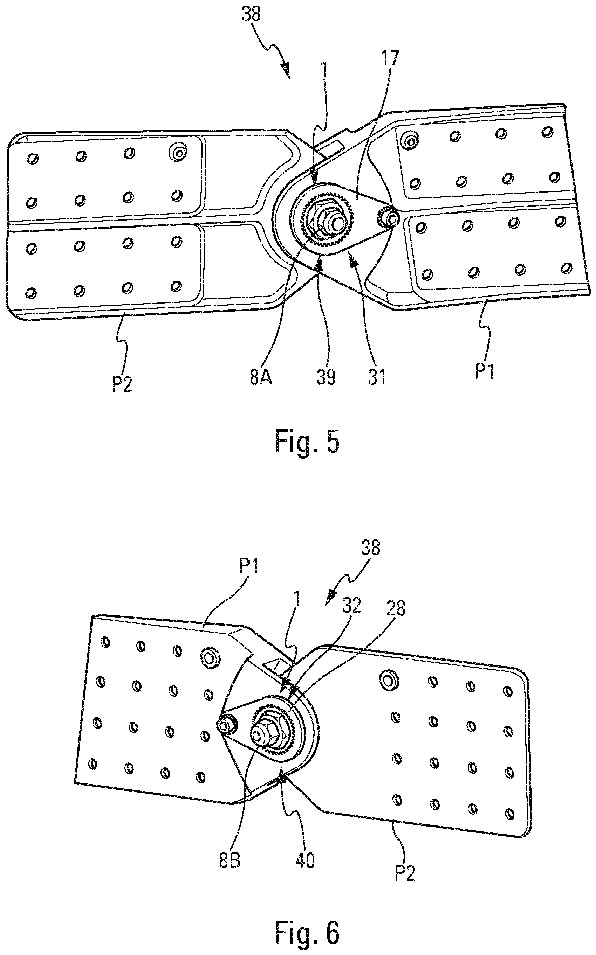

Les figures 5 et 6 montrent un ensemble (ou assemblage) mécanique 38 illustrant la liaison telle que réalisée. Cet ensemble mécanique 38 comporte un assemblage formé de la pièce mécanique P1, de la pièce mécanique P2 et du dispositif de liaison 1 tel que décrit ci-dessus, qui lie ensemble ces pièces mécaniques P1 et P2. La figure 5 illustre la vue d'un côté 39 de l'ensemble mécanique 38, montrant notamment la plaquette 17 (sur la face 31), et la figure 6 illustre l'autre côté 40 de l'ensemble mécanique 38, montrant notamment la plaquette 28 (sur la face 32).

Le dispositif de liaison 1 est un dispositif à double cisaillement, le cisaillement étant l'état de contrainte interne de l'ensemble mécanique 38, dans lequel chacune des pièces mécaniques P1 et P2 a tendance, sous l'effet de forces de sens contraire, à glisser l'une par rapport à l'autre.

Le dispositif de liaison 1, tel que décrit ci-dessus, est assemblé aux deux pièces mécaniques P1 et P2 pour former l'ensemble mécanique 38 des figures 5 et 6, à l'aide d'un procédé d'assemblage représenté sur la figure 7.

Ce procédé d'assemblage comprend, notamment, les étapes suivantes :
- une étape E1 consistant à amener l'extrémité 6 (figure 2) de la pièce mécanique P2, pourvue du trou circulaire T2, entre les deux bras F1 et F2 de la fourche F de la pièce mécanique P1 de manière à superposer les trous circulaires T1A, T1B et T2 ;
- une étape E2 consistant à insérer l'axe excentrique 2 et les manchons excentriques 10A et 10B dans ces trous circulaires T1A, T1B, et T2 superposés, les manchons excentriques 10A et 10B entourant l'axe excentrique 2, à amener le manchon excentrique 10A et l'axe excentrique 2 dans une première position relative en rotation, et à amener le manchon excentrique 10B et l'axe excentrique 2 dans une seconde position relative en rotation, ces première et seconde positions relatives permettant de compenser, le cas échéant, des jeux ; et
- une étape E3 consistant à bloquer en rotation les manchons excentriques 10A et 10B (et ainsi également l'axe excentrique 2), à l'aide des éléments de blocage 16 et 27, et à fixer longitudinalement l'axe excentrique 2 (et ainsi également les manchons excentriques 10A et 10B) en vissant les écrous 8A et 8B, respectivement, sur les tiges filetées 7A et 7B dudit axe excentrique 2.

Une application préférée dudit dispositif de liaison 1 concerne la fixation d'un module d'assemblage sur un aéronef, en particulier sur un avion de transport, et notamment la fixation d'un module de plancher dans le fuselage de l'aéronef. A cet effet, le module de plancher peut être équipé de conduites d'eau, de câblages électriques, de gaines d'aération, de panneaux de sol,.... Dans ce cas, le module de plancher est fixé dans le fuselage de l'aéronef au niveau d'une pluralité de points de fixation, dont au moins certains (et de préférence l'ensemble) utilisent des dispositifs de liaison 1 tels que celui décrit ci-dessus. Pour ce faire, le module de plancher équipé est déplacé en étant guidé par des détecteurs dans le fuselage, et il est amené dans sa position définitive à l'intérieur du fuselage. Puis, il est fixé audit fuselage à ladite pluralité de points de fixation.

Dans cette application, à chaque point de fixation comprenant un ensemble mécanique 38, la pièce mécanique P1 fait partie du fuselage ou correspond à une pièce fixée audit fuselage et la pièce mécanique P2 fait partie du module de plancher ou correspond à une pièce fixée audit module de plancher, ou inversement.

Le dispositif de liaison 1, tel que décrit ci-dessus, présente de nombreux avantages. En particulier, il permet d'obtenir :
- une liaison apte à compenser localement des écarts de fabrication et/ou d'alignement sans avoir à réaliser d'opérations d'ajustement ;
- une liaison rapide, car la mise en place du dispositif de liaison 1 peut être réalisée rapidement, puisqu'elle ne nécessite pas, notamment, d'opérations d'ajustement, ni de perçages ; et
- une liaison propre, car aucun perçage n'est nécessaire et la mise en place du dispositif de liaison 1 ne génère pas de déchets.

## Revendications

1. Dispositif de liaison destiné à lier ensemble deux pièces mécaniques, une première (P1) desdites pièces mécaniques (P1, P2) étant munie d'une fourche (F) à deux branches (F1, F2), chacune desdites branches (F1, F2) étant pourvue d'un trou circulaire (T1A, T1B), et la seconde (P2) desdites pièces mécaniques (P1, P2), étant pourvue d'un trou circulaire (T2),
**caractérisé en ce qu'**il comporte au moins :
- un axe excentrique (2) comprenant au moins des premier et deuxième tronçons cylindriques (3A, 3B) coaxiaux présentant un premier axe de révolution (A1) et, entre ces premier et deuxième tronçons cylindriques (3A, 3B), un troisième tronçon cylindrique (4) présentant un second axe de révolution (A2), lesdits premier et second axes de révolution (A1, A2) étant différents, ledit troisième tronçon cylindrique (4) étant destiné à traverser le trou circulaire (T2) de ladite seconde pièce mécanique (P2) ;
- un premier manchon excentrique (10A) comprenant au moins un cylindre creux (11) pourvu d'une surface cylindrique externe (12) et d'une surface cylindrique interne (14), la surface cylindrique externe (12) étant destinée à être insérée dans le trou circulaire (T1A) d'une première (F1) desdites branches (F1, F2) de la fourche (F) et la surface cylindrique interne (14) étant destinée à recevoir le premier tronçon cylindrique (3A) de l'axe excentrique (2), lesdites surfaces cylindriques externe et interne (12, 14) du premier manchon excentrique (10A) présentant des axes de révolution (A3, A4) différents ; et
- un second manchon excentrique (10B) comprenant au moins un cylindre creux (11) pourvu d'une surface cylindrique externe (12) et d'une surface cylindrique interne (14), la surface cylindrique externe (12) étant destinée à être insérée dans le trou circulaire (T1B) de la seconde (F2) desdites branches (F1, F2) de la fourche (F) et la surface cylindrique interne (14) étant destinée à recevoir le deuxième tronçon cylindrique (3B) de l'axe excentrique (2), lesdites surfaces cylindriques externe et interne (12, 14) du second manchon excentrique (10B) présentant des axes de révolution (A3, A4) différents.

2. Dispositif de liaison selon la revendication 1,
**caractérisé en ce qu'**il comporte de plus :
- un premier élément de blocage (16) apte à bloquer en rotation le premier manchon excentrique (10A) ; et
- un second élément de blocage (27) apte à bloquer en rotation le second manchon excentrique (10B).

3. Dispositif de liaison selon l'une des revendications 1 et 2,
**caractérisé en ce qu'**il comporte un joint à rotule (9) destiné à être disposé entre ledit troisième tronçon cylindrique (4) et ledit trou circulaire (T2) de la seconde pièce mécanique (P2).

4. Dispositif de liaison selon la revendication 2,
**caractérisé en ce que** le premier élément de blocage (16) comprend une première plaquette (17) pourvue d'une ouverture circulaire (18) à bord interne (19) cranté, destinée à enserrer un bord périphérique (21) cranté de forme complémentaire dudit premier manchon excentrique (10A), ladite première plaquette (17) étant apte à être fixée.

5. Dispositif de liaison selon l'une des revendications 2 et 4,
**caractérisé en ce que** le second élément de blocage (27) comprend une seconde plaquette (28) pourvue d'une ouverture circulaire (29) à bord interne (30) cranté, destinée à enserrer un bord périphérique (21) cranté de forme complémentaire dudit second manchon excentrique (10B), ladite seconde plaquette (28) étant apte à être fixée.

6. Dispositif de liaison selon l'une quelconque des revendications précédentes,
caractérisé les premier, deuxième et troisième tronçons cylindriques (3A, 4, 3B) sont raccordés directement l'un à l'autre longitudinalement.

7. Dispositif de liaison selon l'une quelconque des revendications précédentes,
caractérisé ledit axe excentrique (2) est pourvu, à chacune de ses extrémités (5A, 5B), d'un tronçon fileté (7A, 7B) destiné à recevoir un écrou (8A, 8B).

8. Ensemble mécanique,
**caractérisé en ce qu'**il comporte une première pièce mécanique (P1), une seconde pièce mécanique (P2) et un dispositif de liaison (1) tel que celui spécifié sous l'une quelconque des revendications 1 à 7, qui lie ensemble lesdites première et seconde pièces mécaniques (P1, P2).

9. Ensemble mécanique selon la revendication 8, comportant un dispositif de liaison (1) selon l'une des revendications 2, 4 et 5,
**caractérisé en ce que** le premier élément de blocage (16) et le second élément de blocage (27) sont fixés sur la première pièce mécanique (P1).

10. Procédé d'assemblage de deux pièces mécaniques, à l'aide d'un dispositif de liaison (1) tel que celui spécifié sous l'une quelconque des revendications 1 à 7, une première (P1) desdites pièces mécaniques (P1, P2) étant munie d'une fourche (F) à deux branches (F1, F2), chacune desdites branches (F1, F2) étant pourvue d'un trou circulaire (T1A, T1B), et la seconde (P2) desdites pièces mécaniques (P1, P2) étant pourvue d'un trou circulaire (T2),
**caractérisé en ce qu'**il comprend des étapes (E1, E2, E3) consistant successivement au moins :
- à amener la seconde pièce mécanique (P2) de sorte qu'une extrémité (6) de cette dernière, pourvue du trou circulaire (T2), soit introduite entre les branches (F1, F2) de la fourche (F) de la première pièce mécanique (P1) de manière à superposer les trois trous circulaires (T1A, T1B, T2) ;
- à insérer l'axe excentrique (2) et les manchons excentriques (10) dans ces trous circulaires (T1A, T1B, T2) superposés et les amener dans des positions relatives en rotation permettant de compenser le cas échéant des jeux ; et
- à bloquer en rotation les manchons excentriques (10A, 10B) et l'axe excentrique (2), à l'aide des éléments de blocage (16, 27).
